# EUROPEAN PATENT APPLICATION

(11) **EP 4 764 916 A1**
(43) Date of publication of application: **24.06.2026**
(21) Application number: 24307168.5
(22) Date of filing: 18.12.2024
(51) Int. Cl.: G06F 21/52, G06F 21/53, G06F 21/62, G06F 21/79, G06F 21/85

(54) **MONITORING OF DIRECT MEMORY ACCESS OPERATIONS OF A PERIPHERAL DEVICE**

(71) Applicant: THALES DIS FRANCE SAS, 92190 Meudon (FR)
(72) Inventor: DE BONFILS LAVERNELLE, Jean, 24100 BERGERAC (FR)
(74) Representative: Bricks, Amélie

(57) **Abstract**

The invention provides a method for monitoring Direct Memory Access, DMA, operations performed by a peripheral device on a main memory of a computer system, the peripheral device being controlled by a driver executed on the computer system. Upon detection of a command for execution of DMA operations based on a descriptor table, the descriptor table comprising at least one descriptor describing a DMA operation, the method comprises checking (304) compliance of the at least one descriptor with predefined security rules, wherein said descriptor table is stored by the driver in a memory section accessible to the driver. In case of positive check, the at least one descriptor is duplicated (306) to obtain a copy of the descriptor table stored in the main memory, outside of the memory section accessible to the driver. Then, a memory address of the copy of the descriptor table is stored (307) in a part of the memory section accessible to the peripheral device and the command for execution is forwarded (308) to the peripheral device.

## Description

This invention is related to the field of protection against Direct Memory Access, DMA, attacks in a computer system.

The invention is useful in particular, while not exclusively, in the context of a computer system comprising a hypervisor running several virtual machines, including an untrusted virtual machine, or of a computer system in which an untrusted or buggy driver is executed in a kernel.

DMA is a functionality that allows a peripheral device (also called Input and Output device, I/O device, in what follows) connected to a bus of a computer system, to have a direct access to a main memory (including RAM) of the computer system, without any intervention from a processor of the computer system.

DMA is mandatory in many I/O devices for performance reasons. I/O devices may encompass the following devices :
- Graphical Processing Units, GPUs;
- Network Interface Controllers, NICs;
- Secure Digital, SD, cards;
- embedded MultiMedia Cards, eMMC;
- Universal Serial Bus, USB, peripheral devices; etc.

However, in virtualized environments, a malicious virtual machine run by the hypervisor, may have a direct access to a DMA capable I/O device and may use it to access memory sections of the main memory that it should not access (for example to memory sections of the physical main memory dedicated to another virtual machine run by the hypervisor). This leads to a major security issue and contradicts one of the targets of the hypervisor, which is to maintain isolation between the several virtual machines it runs. In addition, embedded systems are even more vulnerable to DMA attacks that they often have a large number of peripherals.

DMA attacks may also occur in non-virtualized computer systems, for example, when an untrusted or buggy driver of an I/O device, is executed in the kernel of the computer system to instruct DMA operations to the I/O device during execution of an application executed on the kernel. The untrusted or buggy driver may instruct the I/O device to access to memory sections of the main memory that it should not access, for example to portions of the main memory dedicated to storage of kernel data, instead of accessing the RAM dedicated to the application in the main memory.

A known solution to prevent DMA attacks is to implement a hardware element called IOMMU, which stands for Input Output Memory Management Unit, which is interfaced between a DMA capable peripheral device and the main memory of a computer system, and which maps virtual addresses visible to the peripheral, to physical addresses of the main memory.

However, many embedded systems implement IOMMUs that do not comply with common IOMMU specifications such as System Memory Management Unit, SMMU, specifications for ARM and, for these reasons, are not compatible with most hypervisors.

Also, even in a computer system implementing IOMMU, the security ensured by IOMMU is limited and some DMA attacks may still be applicable despite the presence of the IOMMU, due to various limitations which depend on the context, the underlying hypervisor and the computer system.

An alternative solution to prevent DMA attacks in a virtualized environment relies on paravirtualization, which consists in interfacing an additional VM or an additional driver in the hypervisor, which acts as proxy, between the untrusted virtual machine and the main memory.

However, paravirtualization impacts the untrusted VM performance, portability and dependency. In addition, it increases the complexity and code size. Also, as mentioned above, it requires the implementation of additional drivers in another VM or in the hypervisor, which makes it a costly solution, unsuitable in many computer systems, in particular in many constrained embedded systems.

In addition, paravirtualization is not possible in non-virtualized environments.

A third solution to prevent DMA attacks in a computer system is to rely on a hardware module that is specifically conceived for the computer system, in which it is aimed to be integrated. However, this leads to constructor, system and architecture specific solutions. Also, many computer systems do not integrate such hardware modules. In addition, these solutions cannot be supported by hypervisors in a virtualized environment.

There is therefore a need to efficiently protect the main memory of a computer system against DMA attacks, with a solution that is not platform specific and without degrading performances of the computer system.

The invention aims at improving the situation.

A first aspect of the invention concerns a method for monitoring Direct Memory Access, DMA, operations performed by a peripheral device on a main memory of a computer system, the peripheral device being controlled by a driver executed on the computer system, the method comprising the following steps:
- upon detection of a command for execution of at least one DMA operation based on a descriptor table stored by the driver in a memory section of the main memory accessible to the driver, the command for execution being issued by the driver, the descriptor table comprising at least one descriptor, each descriptor describing a DMA operation, checking for each descriptor of the descriptor table compliance of said descriptor with at least one predefined security rule, and in case of positive check of said descriptor, duplicating said descriptor in a copy of the descriptor table stored in the main memory, outside of the memory section accessible to the driver;
- after each descriptor has been duplicated, storing a memory address of the copy of the descriptor table in a part of the memory section accessible to the peripheral device and forwarding the command for execution to the peripheral device.

Therefore, the invention enables to efficiently monitor the DMA operations instructed by the driver (when this driver is untrusted or buggy, or is run on an untrusted virtual machine) to an I/O device (the peripheral), in a computer system. The invention can be implemented as a software solution, which is compatible with any processor (ARM or RISC-V for example) and which does not require additional hardware component in the computer system (contrary to the IOMMU solution): it is based on common hardware available in most of the computer systems. The solution can therefore be implemented in most of the embedded systems. In addition, the solution does not negatively impact (or only slightly impacts) the performance of the computer system because the one or several descriptors of the descriptor table are checked only once, when an execution command is detected (instead of checking each descriptor individually after each descriptor is added to the description table). Although the performance is also impacted by the size of the copy of the descriptor table, descriptor tables are generally small in size.

In addition, contrary to the solution involving IOMMU, the invention enables to prevent DMA attacks upstream of the execution of DMA operations by the peripheral device.

According to a first embodiment, the computer system may comprise a hypervisor, and at least one first virtual machine run by the hypervisor. The driver may be executed by the first virtual machine and the steps of the method may be implemented by the hypervisor.

The first embodiment is advantageous as virtualized environments are vulnerable to DMA attacks, for example when the driver of an untrusted virtual machine attempts to access to a memory section of the main memory dedicated to another virtual machine or to the hypervisor memory. In addition, in the first embodiment, the monitoring of the DMA operations is transparent for the first VM executing the driver, and it does not affect the normal operation of the first VM.

In complement, in the first embodiment, the memory section accessible to the driver may be a first memory section of the main memory dedicated to the first virtual machine and the main memory may further comprise a second memory section dedicated to the hypervisor or to a second virtual machine run by the hypervisor. The descriptor table may be stored by the driver in the first memory section and the hypervisor may store the copy of the descriptor table in the main memory outside of the first and second memory sections.

Therefore, the hypervisor ensures that any modification to the descriptor table that would be performed by the driver after the command for execution is detected, does not affect the copy of descriptor table, because this copy is not exposed to the untrusted virtual machine hosting the driver.

Still in complement, in the first embodiment, the at least one predefined security rule comprises a security rule verifying that the DMA operation points to a memory address outside of the second memory section.

Therefore, the first embodiment ensures that the hypervisor and the virtual machines other than the untrusted virtual machine hosting the driver, are protected against DMA attacks initiated by the untrusted virtual machine. Isolation between the different virtual machines is therefore ensured.

Alternatively, according to a second embodiment, the computer system may comprise a single kernel executed by a processor of the computer system and the driver may be executed in the kernel.

The invention is also advantageous in non-virtualized environments, for example for protecting memory sections of the main memory that should not be accessed by the peripheral (for example a kernel data section or a kernel code section).

According to some embodiments, the command for execution may be detected by receiving an exception raised by a Memory Management Unit, MMU, interfacing the driver with the main memory.

Therefore, the invention may be based on common hardware available in most computer systems.

According to some embodiments, in case of negative check of one descriptor at least, the method may comprise issuing an alert and/or blocking the driver.

This prevents future DMA attacks after an untrusted or buggy driver or virtual machine has been detected as malicious.

According to some embodiments, the part of the memory section accessible to the peripheral device is a Memory Mapped Input Output, MMIO, part of the memory section.

Therefore, the invention acts as an intermediate between the driver and the peripheral device, in a transparent manner for both the driver and the peripheral device.

A second aspect of the invention concerns a computer program comprising instructions arranged for implementing the method according to the first aspect of the invention, when said instructions are executed by a processor.

A third aspect of the invention concerns a computer system comprising a processor configured for executing a module for monitoring Direct Memory Access, DMA, operations performed by a peripheral device on a main memory of the computer system, the peripheral device being controlled by a driver executed on the computer system, the module being configured for:
- upon detection of a command for execution of at least one DMA operation based on a descriptor table stored by the driver in a memory section of the main memory accessible to the driver, the command for execution being issued by the driver, the descriptor table comprising at least one descriptor, each descriptor describing a DMA operation, checking for each descriptor of the descriptor table compliance of said descriptor with at least one predefined security rule, and in case of positive check of said descriptor, duplicating said descriptor in a copy of the descriptor table stored in the main memory, outside of the memory section accessible to the driver;
- after each descriptor has been duplicated, storing a memory address of the copy of the descriptor table in a part of the memory section accessible to the peripheral device and forwarding the command for execution to the peripheral device.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### Brief description of the drawings:

[Fig. 1] shows main hardware components of a computer system according to some embodiments of the invention;
[Fig. 2a] shows hardware and software components of a computer system according to a first embodiment of the invention;
[Fig. 2b] shows hardware and software components of a computer system according to a second embodiment of the invention;
[Fig. 3] illustrates the steps of a method for monitoring DMA operations in a computer system, according to some embodiments of the invention;
[Fig. 4a] illustrates the respective states of a virtual memory and of the physical main memory, after some steps of the method according to the invention;
[Fig. 4b] illustrates the respective states of a virtual memory and of the physical main memory, after some other steps of the method according to the invention.

### Detailed description

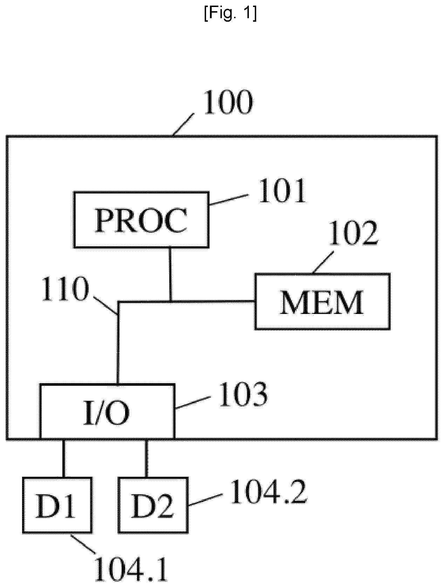

Figure 1 main hardware components of a computer system 100 according to some embodiments of the invention.

The computer system 100 comprises a processor 101, which may comprise one or multiple microprocessors, microcontrollers or Digital Signal Processor, DSP, on a single Integrated Circuit (IC) or several IC chips.

The computer system 100 further comprises a main memory 102.

No restriction is attached to the main memory 102, which may be any non-transient, tangible form of memory. For example, it can comprise ROM, RAM, EEPROM and/or flash memory. The processor 101 may be programmable and may be configured to execute instructions that are stored in its internal memory or to execute instructions that are stored in the main memory 102. According to some embodiments, the main memory 102 may comprise several memories, including at least one Non Volatile Memory, NVM.

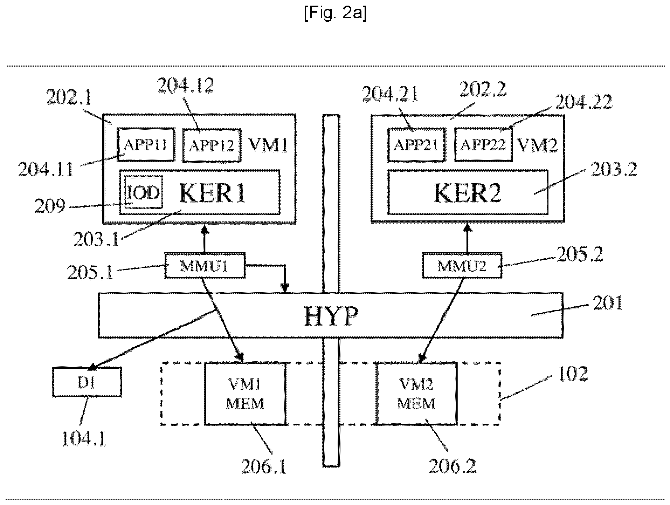

According to a first embodiment, described in what follows referring to figure 2a, the computer system 100 is a virtualized system and the processor 101 executes a hypervisor that runs at least one virtual machine.

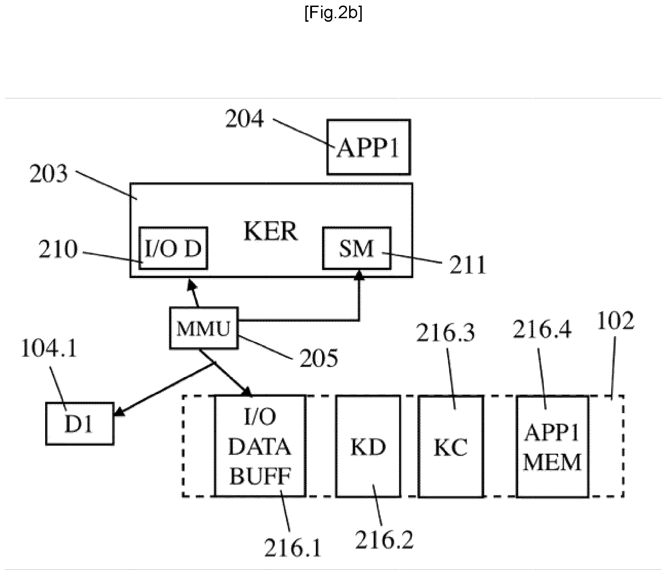

In an alternative second embodiment, described in what follows referring to figure 2b, the computer system 100 is non-virtualized, and the processor 101 executes a kernel supporting one or several applications.

The computer system further comprises an input/output interface 103 which can enable one or several peripheral devices 104.1 and 104.2 to access a bus 110 interconnecting the master and slave components of the computer system 100. According to the invention, at least one of the peripheral devices is a DMA capable I/O device. In what follows, it is considered, for illustrative purposes, that the peripheral device 104.1 is a DMA capable I/O device.

No restriction is attached to the technology of the processor 101 that is implemented in the computer system 100, which can be according to an ARM architecture (Advanced RISK Machine), according to a RISC-V architecture or according to a MIPS architecture (Microprocessor without Interlocked Pipeline Stages) for example.

Also, no restriction is attached to the peripheral devices 104.1 and 104.2, which can be of one or several of the following types of peripherals:
- Graphical Processing Units, GPUs;
- Network Interface Controllers, NICs
- Secure Digital, SD, cards;
- embedded MultiMedia Cards, eMMC;
- Universal Serial Bus, USB, peripheral devices; etc.

Figure 2a is a representation of hardware and software components of a computer system 100 according to a first embodiment of the invention.

In the first embodiment, the computer system 100 is a virtualized environment, comprising a hypervisor 201 executed by the processor 101, which runs at least one virtual machine, including at least a first virtual machine 202.1. In the example described on figure 2a, the computer system 100 further comprises a second virtual machine 202.2. No restriction is attached to the number or types of virtual machines that are run by the hypervisor 201, which is any number equal to or greater than 1.

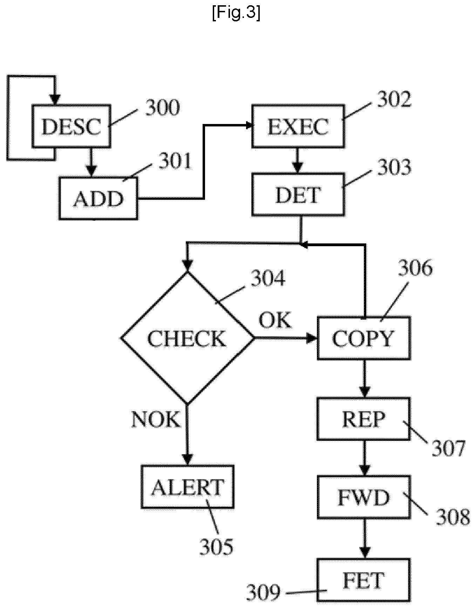

According to the invention, the first virtual machine 202.1 is a third party virtual machine, that is untrusted. Therefore, in the first embodiment, the control method described in what follows referring to figure 3 is applied to the first virtual machine 202.1.

The first virtual machine 202.1 comprises a first kernel 203.1 on which several first applications can be executed, including for example first applications 204.11 and 204.12.

Execution of the first applications 204.11 and 204.12 requires access to the main memory 102 of the computer system, in particular to the RAM.

To this end, the first virtual machine 202.1 may access a dedicated first memory section 206.1 of the main memory 102. The dedicated first memory section 206.1 comprises a range of physical addresses of the main memory 102. The execution of separate virtual machines by the hypervisor 201 aims at ensuring that the first memory section 206.1 of the main memory 102 can only be accessed by the first VM 202.1, and by peripherals using DMA if the first VM 202.1 instructs them to do so.

To map virtual addresses of the main memory 102 that are visible by the first kernel 203.1, with the physical addresses of the first memory section 206.1 of the main memory 102, the computer system 100 further comprises a first Memory Management Unit, MMU, 205.1. Therefore, when the first VM 202.1 reads or writes a virtual address of the first memory section 206.1, the first MMU 205.1 maps the read or write command to the corresponding physical address of the first memory section 206.1.

Executions of the first applications 204.11 and 204.12 may also require instructing peripherals such as the first I/O device 104.1 to execute DMA operations in the first memory section 206.1.

To this end, an I/O driver 209 executed in the first kernel 203.1 of the first VM 202.1 may write a set of DMA operations in the form of a linked list of buffer descriptors (also named descriptor table in what follows), in the first memory section 206.1 and may indicate a memory address to access the descriptor table in a MMIO part of the first memory section 206.1, described in what follows. The I/O driver 209 may then send a command for execution of at least one DMA operation based on the descriptor table to the first I/O device 104.1, as explained in what follows.

MMIO refers to Memory Mapped Input Output, and the MMIO part maps addresses of memory and registers of the I/O devices, including the first I/O device 104.1, to physical addresses of the first memory section 206.1 of the main memory 102. The principles of MMIO are well known and are not further described in the present description.

The second virtual machine 202.2 comprises a second kernel 203.2 on which several second applications can be executed, including for example second applications 204.21 and 204.22.

As per the first applications 204.11 and 204.12, execution of the second applications 204.21 and 204.2 requires access to the main memory 102 of the computer system 100, in particular to the RAM. To this end, the second virtual machine 202.2 may access a dedicated second memory section 206.2 of the main memory 102. The dedicated second memory section 206.2 comprises a range of physical addresses of the main memory 102. The execution of separate virtual machines by the hypervisor 201 aims at ensuring that the second memory section 206.2 of the main memory 102 can only be accessed by the second VM 202.2, and by peripherals using DMA if the second VM 202.2 instruct them to do so.

Therefore, the first memory section 206.1 dedicated to the first VM 202.1 is separate from the second memory section 206.2 dedicated to the second VM 202.2. In addition, the main memory 102 may further comprise a hypervisor memory that is reserved for the hypervisor 201, and that should not be accessed by any of the VM or by a peripheral device during DMA operations.

To map virtual addresses of the main memory 102 that are visible by the second kernel 203.2, with the physical addresses of the second memory section 206.2 of the main memory 102, the computer system 100 further comprises a second MMU 205.2.

As explained in the introductory section, the first VM 202.1, which is untrusted, may instruct, in the descriptor table, the first I/O device 104.1 to perform DMA operations in the second memory section 206.2 dedicated to the second VM 202.2 or in the hypervisor memory. To prevent this, the hypervisor 201 may execute some steps of a method according to the invention, as described when referring to figure 3 described hereafter.

Figure 2b is a representation of hardware and software components of a computer system 100 according to a second embodiment of the invention.

As explained above, in the second embodiment, the computer system 100 is non virtualized. The processor 101 of the computer system 100 can therefore execute a single kernel 203 on which one or several applications are executed, including an application 204. No restriction is attached to the number and types of applications executed on the kernel 203.

Execution of the application 204 requires access to the main memory 102 of the computer system 100, in particular to the RAM, which may comprise an application memory section 216.4 reserved for the execution of the application 204.

The main memory 102 may also comprise a kernel data memory section 216.2 and a kernel code memory section 216.3.

Execution of the application may also require instructing peripherals such as the first I/O device 104.1 to execute one or several DMA operations in the application memory section 216.4.

To this end, an I/O driver 210 may be executed in the kernel 203, to enable the first application 204 to command the first I/O device 104.1, in particular to instruct the first I/O device 104.1 to perform DMA operations.

To this end, the driver 210 may write a set of DMA operations in the form of a descriptor table in a dedicated I/O driver memory section 216.1 of the main memory 102 and may indicate the memory address to access the descriptor table in a MMIO part of the I/O driver memory section 216.1. The driver 210 may then send a command for execution of DMA operations based on the descriptor table to the first I/O device 104.1, as explained in what follows.

To map virtual addresses of the main memory 102 that are visible by the driver 210, with the physical addresses of the I/O driver memory section 216.1 of the main memory 102, the computer system 100 further comprises an MMU 205. Therefore, when the driver 210 reads or writes in a virtual address of the I/O driver memory section 216.1, the MMU 205 maps the read or write command to the corresponding physical address of the I/O driver memory section 216.1.

According to the invention, the I/O driver 210 may be untrusted and may use the first I/O device 104.1 to perform DMA operations in a section memory that it is not allowed to access, for example the kernel data memory section 216.2. To prevent this, a security module 211 of the kernel 203 may execute some of the steps of the method according to the invention as described in what follows referring to figure 3.

Figure 3 shows the steps of a method for monitoring DMA operations in the computer system, according to some embodiments of the invention.

The method may be implemented in a virtualized environment in the first embodiment, as shown on figure 2a, or in a non-virtualized environment in the second embodiment, as shown on figure 2b.

At a step 300, an untrusted driver, which may be the I/O driver 209 of the untrusted first VM 202.1 in the first embodiment, or the untrusted or buggy I/O driver 210 in the second embodiment, adds a descriptor to a descriptor table in a virtual memory exposed to the untrusted driver.

A descriptor may be defined by the following fields:
- a memory address pointing to a data buffer of the main memory 102, the data buffer comprising data on which the DMA operation corresponding to the descriptor is to be applied by the first I/O device 104.1, or a memory address pointing to another descriptor of the descriptor table;
- an optional length field indicating a size of data buffer pointed to by the above memory address
- at least one flag, which may for example indicate a type of DMA operation to be performed on the data in the data buffer, and/or indicate that the descriptor is the last descriptor and/or indicate if the descriptor is a linked descriptor and/or indicate that an interrupt is to be generated, etc.

Step 300 can be repeated several times during preparation of a whole descriptor table, which may comprise a plurality of descriptors.

The descriptor table is inserted at a given memory address, named DESC_AD, of the virtual memory that can be accessed by the untrusted or buggy I/O driver, corresponding to a physical memory address of the descriptor table in the physical main memory 102.

At a step 301, the untrusted or buggy driver 209 or 210 sets the memory address DESC_AD in the MMIO part of the main memory 102, which is the MMIO part of the first memory section 206.1 in the first embodiment, and which is the MMIO part of the I/O driver memory section 216.1 in the second embodiment, so that the first I/O device 104.1 can access to the memory address of the descriptor table, and therefore can access the descriptor table for execution.

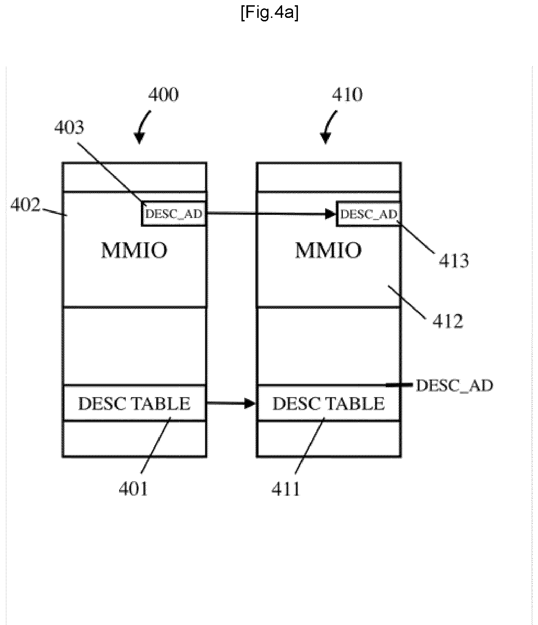

Figure 4a shows the states of the virtual memory visible by the untrusted or buggy driver, and of the physical main memory 102, after steps 300 and 301 of the method according to the invention, that have been described above.

The reference 400 designates the state of the virtual memory, as exposed by the MMU 205 or 205.1 and visible by the untrusted or buggy I/O driver 209 or 210. The reference 410 shows the corresponding state of the physical main memory 102.

As explained above, the untrusted or buggy driver prepares a descriptor table 401 by adding one or several descriptors in the virtual memory 400 at steps 300. The descriptor table 401 in the virtual memory 400 is mapped by the MMU 205.1 or 205 to a corresponding set of physical memory addresses 411 in the physical main memory 102, starting with the physical address named DESC_AD on figure 4a.

At step 301 as described above, the untrusted or buggy driver sets the address DESC_AD at a virtual memory address 403 the MMIO part 402 of the virtual memory, which corresponds to a physical memory address 413 of an MMIO part 412 in the physical main memory 102.

Referring back to figure 3, at a step 302, the untrusted or buggy driver performs a write operation in a register of the MMIO part, so as to send an execution command to the first I/O driver to execute DMA operations based on the descriptor table, which memory address has been set in the MMIO part.

At a step 303, the MMU 205.1 or 205 detects the write of the command for execution in the MMIO part, and transmits a message (raises an exception) to a monitoring module, which is the hypervisor 201 in the first embodiment, or the security module 211 of the kernel 203 in the second embodiment.

Upon reception of the message (exception) at step 303, the monitoring module checks each descriptor of the descriptor table at a step 304. To perform the check of the descriptor table at step 304, the monitoring module may check the compliance of each descriptor with a set of predefined security rules. It is to be noted that, because the format of the descriptor table is generic (not specific to a given processor architecture, although the formats of the descriptors it comprises may vary, to small extents, from one DMA-capable peripheral device to another), the set of predefined security rules may apply to a plurality of different computer systems 100. According to some embodiments, the set of predefined security rules may be applied to the descriptors of the descriptor table, and to the configuration of the MMIO part including the memory address of the descriptor table.

If at least one descriptor of the descriptor table does not comply with the set of predefined security rules (for example because one descriptor indicates a DMA operation in a memory section of the main memory 102 that the untrusted driver is not allowed to access), the monitoring module may generate, at step 305, a security alert and/or may block the untrusted or buggy driver (or the malicious VM in the first embodiment).

At step 306, the monitoring module duplicates the descriptor table in the main memory 102, in a memory section that is not visible to the untrusted or buggy driver (that cannot be accessed by the untrusted or buggy driver). Alternatively, the monitoring module may duplicate each descriptor individually right after verification of the compliance of the descriptor with the set of predefined security rules. The descriptors being copied in a new table, a copy of the descriptor table is therefore obtained and stored in the main memory. In the first embodiment, the copy of the descriptor table is stored outside of the first VM memory 206.1. In the second embodiment, the copy of the descriptor table is stored outside of the I/O driver memory section 216.1.

More generally, the monitoring module stores the copy of the descriptor table outside of the memory section that can be accessed by the untrusted or buggy driver.

In this manner, the untrusted or buggy driver is unable to modify the copy of descriptor table after it has been positively checked by the monitoring module at step 304.

The physical memory address of the copy of descriptor table in the main memory 102 is noted COPY_DESC AD.

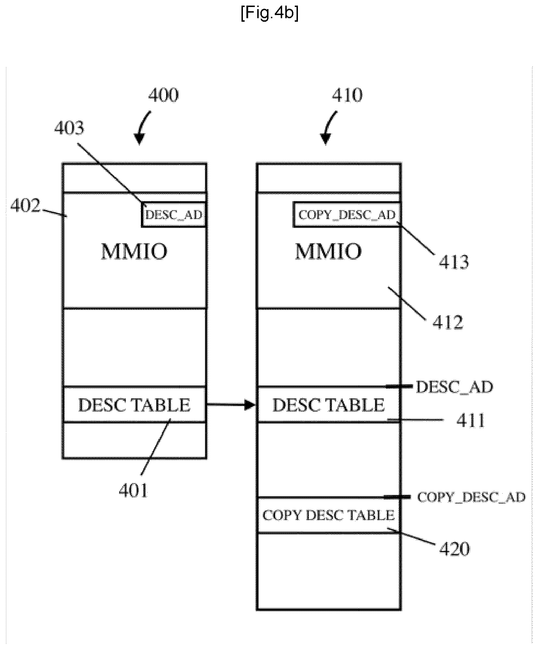

At a step 307, the monitoring module stores the physical address COPY_DESC AD of the copy of descriptor table in the MMIO part of the physical main memory 102. In particular, the monitoring module replaces the physical memory address DESC_AD in the MMIO part of the physical main memory 102, by the physical address COPY_DESC_AD of the copy of descriptor table, as shown on figure 4b.

Figure 4b illustrates the state 400 of the virtual memory accessed by the untrusted or buggy driver, and the state 410 of the physical main memory 102, after steps 306 and 307 have been implemented by the monitoring module.

As shown on figure 4b, the state 400 of the virtual memory accessed by the untrusted or buggy driver is not affected by the implementation of steps 306 and 307, so the monitoring of the DMA operations according to the invention remain transparent for the untrusted or buggy driver.

However, the state 410 of the physical memory is modified to duplicate the descriptor table to obtain a copy 420 stored at a physical memory address COPY_DESC AD, outside of the physical address range corresponding to the virtual address range accessed by the driver.

Also, the monitoring module sets in the MIMO (at the physical address 413) the physical address COPY_DESC_AD of the copy to replace the physical address DESC_AD of the descriptor table.

Therefore, in case the untrusted or buggy driver attempts to modify the descriptor table 401 in the virtual memory, after the execution command is sent at step 301 (for example to add a DMA operation that is not allowed), the descriptor table 411 is modified in the physical main memory 102, but the copy 420 is not affected by this modification, so that the first I/O device only executes the DMA operations of the copy 420, which have been previously checked by the monitoring module.

Referring back to figure 3, after the monitoring module has replaced the physical address DESC_AD with the physical address COPY_DESC_AD in the MIMO part at step 307, the method goes on with step 308.

At step 308, the monitoring module forwards the execution command to the first I/O device 104.1.

At step 309, upon reception of the execution command, the first I/O device 104.1 obtains the physical memory address COPY_ADRESS_AD set in the MIMO part, and fetches the DMA operations contained in the copy of descriptor table 420.

The invention therefore enables to efficiently monitor the DMA operations instructed by an untrusted driver to an I/O device, in a computer system.

In addition, the invention proposes a software solution, which is compatible with any processor (ARM or RISC-V for example) and which does not require additional hardware component in the computer system (contrary to the IOMMU solution): it is based on common hardware available in most of the computer systems (MMU for example). The solution can therefore be implemented in most of the embedded systems.

In addition, the solution does not negatively impact (or only slightly impacts) the performance of the computer system 100. Indeed, the overhead generated by the implementation of steps 303, 304 and 306 to 309 is negligible. In addition, the descriptor is checked only once, when an execution command is detected (instead of checking each descriptor individually after step 300). For example, the invention has been implemented for a first I/O device being an SD card, on a hypervisor, and the timing overhead related to the invention is 0,53% regarding I/O operations.

Although the performance is also impacted by the size of the copy of descriptor table, descriptor tables are generally small. For example, for an SD card, each SD command sent by the driver to the SD card involves a descriptor table of two descriptors on average (so around 16 bytes). They do not generally exceed 400 bytes.

The embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method for monitoring Direct Memory Access, DMA, operations performed by a peripheral device (104.1) on a main memory (102) of a computer system (100), the peripheral device being controlled by a driver (209; 210) executed on the computer system, the method comprising the following steps:
- upon detection of a command for execution of at least one DMA operation based on a descriptor table stored by the driver in a memory section (206.1; 216.1) of the main memory accessible to the driver, the command for execution being issued by the driver, the descriptor table comprising at least one descriptor, each descriptor describing a DMA operation, checking for each descriptor of the descriptor table (304) compliance of said descriptor with at least one predefined security rule, and in case of positive check of said descriptor, duplicating (306) said descriptor in a copy of the descriptor table stored in the main memory, outside of the memory section accessible to the driver;
- after each descriptor has been duplicated, storing (307) a memory address of the copy of the descriptor table in a part (412) of the memory section accessible to the peripheral device and forwarding (308) the command for execution to the peripheral device.

2. The method according to claim 1, wherein the computer system (100) comprises a hypervisor (201), and at least a first virtual machine (202.1) run by the hypervisor, wherein the driver (209; 210) is executed by the first virtual machine and wherein the steps of the method are implemented by the hypervisor.

3. The method according to claim 2, wherein the memory section (206.1; 216.1) accessible to the driver (209; 210) is a first memory section (206.1) of the main memory dedicated to the first virtual machine (202.1), wherein the main memory further comprises a second memory section (206.2) dedicated to the hypervisor or to a second virtual machine (202.2) run by the hypervisor,
wherein the descriptor table is stored by the driver in the first memory section and wherein the hypervisor (201) stores the copy of the descriptor table in the main memory outside of the first and second memory sections.

4. The method according to claim 3, wherein the at least one predefined security rule comprises a security rule verifying that the DMA operation points to a memory address outside of the second memory section (202.2).

5. The method according to claim 1, wherein the computer system comprises a single kernel (203) executed by a processor (101) of the computer system (100) and wherein the driver (210) is executed in the kernel.

6. The method according to one of the preceding claims, wherein the command for execution is detected by receiving (303) an exception raised by a Memory Management Unit, MMU (205; 205.1), interfacing the driver (209; 210) with the main memory (102).

7. The method according to one of the preceding claims, wherein in case of negative check of one descriptor at least, the method comprises issuing (305) an alert and/or blocking the driver (209; 210).

8. The method according to claim 1, wherein the part of the memory section accessible to the peripheral device (104.1) is a Memory Mapped Input Output, MMIO, part (412) of the memory section (206.1; 216.1).

9. A computer program comprising instructions arranged for implementing the method according to one of claims 1 to 8, when said instructions are executed by a processor (101).

10. A computer system (100) comprising a processor (101) configured for executing a module (201; 211) for monitoring Direct Memory Access, DMA, operations performed by a peripheral device (104.1) on a main memory (102) of the computer system, the peripheral device being controlled by a driver (209; 210) executed on the computer system, the module for monitoring being configured for:
- upon detection of a command for execution of at least one DMA operation based on a descriptor table stored by the driver in a memory section (206.1; 216.1) of the main memory accessible to the driver, the command for execution being issued by the driver, the descriptor table comprising at least one descriptor, each descriptor describing a DMA operation, checking for each descriptor of the descriptor table (304) compliance of said descriptor with at least one predefined security rule, and in case of positive check of said descriptor, duplicating (306) said descriptor in a copy of the descriptor table stored in the main memory, outside of the memory section accessible to the driver;
- after each descriptor has been duplicated, storing (307) a memory address of the copy of the descriptor table in a part (412) of the memory section accessible to the peripheral device and forwarding (308) the command for execution to the peripheral device.
